Europäisches Patentamt

European Patent Office

Office européen des brevets

(11) Veröffentlichungsnummer: **0 352 762**
**A1**

## (12) EUROPÄISCHE PATENTANMELDUNG

(21) Anmeldenummer: 89113766.3

(51) Int. Cl.⁴: **B60R 1/02**

(22) Anmeldetag: 26.07.89

(30) Priorität: 28.07.88 DE 3825648

(43) Veröffentlichungstag der Anmeldung:
**31.01.90 Patentblatt 90/05**

(84) Benannte Vertragsstaaten:
**BE DE ES FR GB IT NL SE**

(71) Anmelder: **MEKRA Rangau Plastics GmbH &
Co KG
Schuckertstrasse 12-20
D-8510 Fürth/Bay. 18(DE)**

(72) Erfinder: **Lang, Heinrich**

**D-8531 Ergersheim(DE)**
Erfinder: **Seiboth, Wolfgang
Danziger Ring 55
D-8532 Bad Windsheim(DE)**

(74) Vertreter: **Rau, Manfred, Dr. Dipl.-Ing. et al
Rau & Schneck, Patentanwälte Königstrasse
2
D-8500 Nürnberg 1(DE)**

(54) **Verstellbarer Rückspiegel.**

(57) Ein verstellbarer Rückspiegel für Lastkraftwagen weist ein Gehäuse (1) und eine auf einem schwenkverstellbaren Spiegelglashalter (18) lösbar angebrachte Spiegelglasscheibe (19) auf. Um eine einfache Auswechselbarkeit der Spiegelglasscheibe (19) mit einfachen Mitteln zu ermöglichen, ohne die Stabilität der Gesamthalterung der Spiegelglasscheibe zu beeinträchtigen, ist die Spiegelglasscheibe (19) auf dem Spiegelglashalter (18) mittels eines zumindest teilweise lösbar mit diesem verbundenen Halterahmen (50) gehalten.

**FIG.5**

Die Erfindung betrifft einen verstellbaren Rückspiegel nach dem Oberbegriff des Patentanspruches 1.

Ein derartiger Rückspiegel ist aus der DE-PS 25 49 555 bekannt. Hierbei sind an der Rückseite des Spiegelglases Clipse durch Kleben befestigt, die unter elastischer Formung in Ausnehmungen eines Spiegelglashalters eindrückbar sind. Der Vorteil dieser Ausgestaltung liegt in der leichten Montage und Demontage der Spiegelglasscheibe und zwar insbesondere bei einer Beschädigung dieser Scheibe. Ein wesentlicher Nachteil dieser Ausgestaltung liegt darin, daß mit einer derartigen Clips-Halterung eine auch den schweren und ständigen Vibrationen im Betrieb ausreichend genügende Festlegung der Spiegelglasscheibe nicht erreichbar ist. Darüber hinaus liegen die Seitenkanten der Spiegelglasscheibe offen, so daß Beschädigungen sehr leicht auftreten können.

Aus der DE-PS 29 07 433 ist es bereits bekannt geworden, die Spiegelglasscheibe auf einer Glasträgerplatte zu befestigen und diese mittels eines Bajonett-Verschlusses durch eine Drehbewegung mit einer Halterung lösbar zu verbinden. Wenn bei dieser Ausgestaltung die Spiegelglasscheibe beschädigt ist, muß zusammen mit dieser auch die Halteplatte ausgetauscht werden, auf der sie befestigt ist und an der Teile des Bajonett-Verschlusses ausgebildet sind. Bei dieser bekannten Lösung muß bei einem Defektwerden der Spiegelglasscheibe auch die Heizung mit ausgetauscht werden.

Der Erfindung liegt die Aufgabe zugrunde, einen Rückspiegel der gattungsgemäßen Art so auszugestalten, daß ein einfaches Austauschen lediglich der Spiegelglasscheibe möglich ist.

Diese Aufgabe wird erfindungsgemäß durch die Merkmale im Kennzeichnungsteil des Anspruches 1 gelöst. Durch die erfindungsgemäßen Merkmale wird erreicht, daß bei einem Defekt der Spiegelglasscheibe lediglich diese ausgetauscht werden muß, ohne daß eine zwischen dem Spiegelglashalter und der Spiegelglasscheibe befindliche Heizung mit ausgetauscht werden muß. Darüber hinaus ist durch den erfindungsgemäßen Halterahmen der seitliche Randbereich der Spiegelglasscheibe geschützt, so daß ohnehin Beschädigungen der Spiegel glasscheibe weiter reduziert werden. Dadurch, daß lediglich die Spiegelglasscheibe ausgewechselt wird, kann die gesamte Grundkonstruktion, also insbesondere die Spiegelglashalterung und das Gelenk, auf dem diese angebracht ist, so stabil ausgebildet werden, daß der Spiegel selber stabil und vibrationsfrei ist.

Bei einer ersten vorteilhaften Ausführungsform nach den Ansprüchen 4 bis 8 ist an der Rückseite des Spiegelglashalters ein Verriegelungsrahmen angebracht, der mit dem von der Vorderseite gegen die Spiegelglasscheibe angelegten Halterahmen durch Verschieben verriegelbar bzw. lösbar ist.

Bei einer zweiten besonders einfachen Ausführungsform sind Teil-Halterahmen, bevorzugt an zwei einander benachbarten Längskanten des Spiegelhalters vorgesehen, die mit diesem lösbar mittels Rastverschlüssen verbunden sind.

Weitere Einzelheiten, Vorteile und Merkmale der Erfindung ergeben sich aus der nachfolgenden Beschreibung von zwei Ausführungsbeispielen anhand der Zeichnung. Es zeigt

Fig. 1 eine Rückansicht des Gehäuses eines Rückblickspiegels,

Fig. 2 einen Querschnitt durch den Rückspiegel gemäß der Schnittlinie II-II in Fig. 1,

Fig. 3 einen Querschnitt durch den Rückspiegel gemäß der Schnittlinie III-III in Fig. 1,

Fig. 4 eine Draufsicht auf eine Tragplatte mit Spiegelglasscheibe,

Fig. 5 eine Querschnitts-Explosions-Darstellung der Tragplatte mit Spiegelglasscheibe nach Fig. 4,

Fig. 6 einen Teil-Schnitt durch Fig. 4 gemäß der Schnittlinie VI-VI in Fig. 4,

Fig. 7 einen Teilschnitt durch Fig. 4 entsprechend der Schnittlinie VII-VII in Fig. 4,

Fig. 8 einen Teilschnitt durch Fig. 4 entsprechend der Schnittlinie VIII-VIII in Fig. 4,

Fig. 9 einen Teil-Querschnitt durch Fig. 4 entsprechend der Schnittlinie IX-IX in Fig. 4,

Fig. 10 eine Draufsicht auf eine weitere Ausführungsform einer Tragplatte mit Spiegeglasscheibe,

Fig. 11 eine Querschnitts-Explosions-Darstellung der Tragplatte mit Spiegelglasscheibe nach Fig. 10 und

Fig. 12 einen Teil-Querschnitt durch Fig. 10 entsprechend der Schnittlinie XII-XII in Fig. 10.

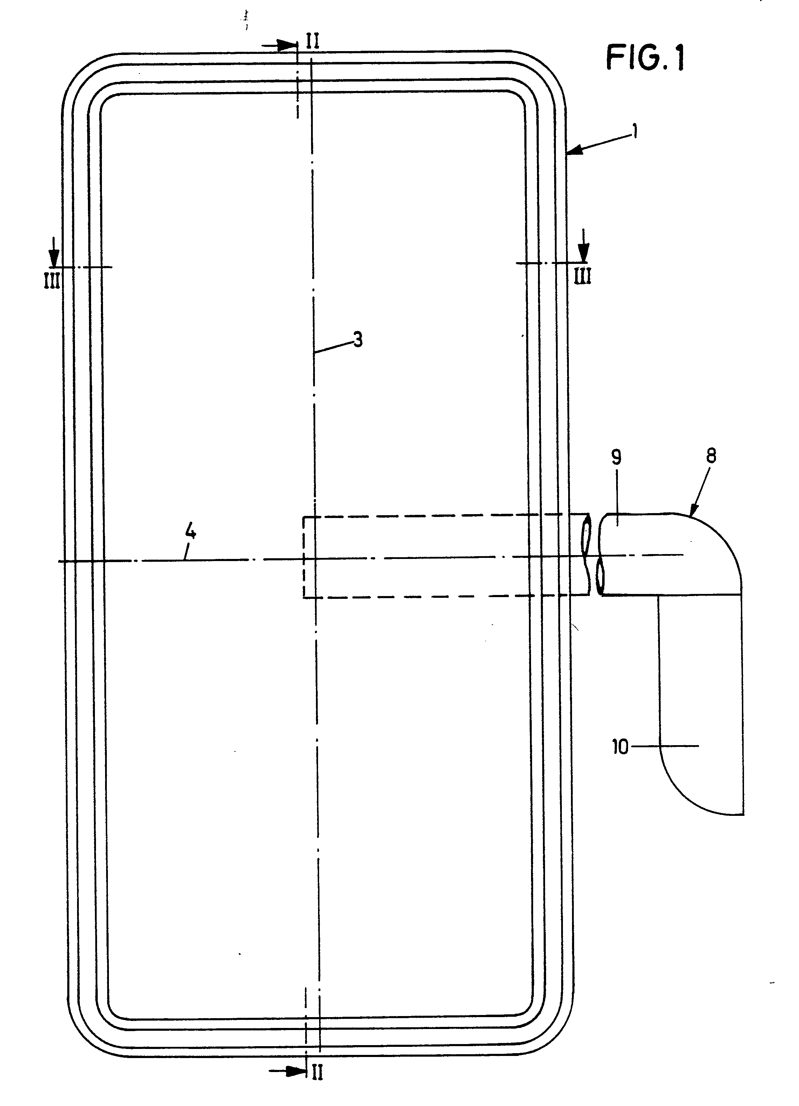

Der in den Figuren 1 bis 3 dargestellte Rückspiegel für Lastkraftwagen weist ein Gehäuse 1 auf, das in der Draufsicht etwa rechteckig ausgebildet ist und etwa die Form einer verhältnismäßig flachen Schale aufweist. Es ist auf einer Seite mit einer Öffnung 2 versehen, die etwa eine Rechteckform aufweist. Diese Öffnung weist zwei senkrecht zueinander verlaufende Symmetrieachsen 3, 4 auf, nämlich eine in der Praxis etwa vertikal anzuordnende lange Symmetrieachse 3 und eine senkrecht hierzu verlaufende in der Praxis also etwa horizontal anzuordnende kurze Symmetrieachse 4. Das Gehäuse 1 selber ist einstückig ausgebildet. Es weist ein der Öffnung 2 gegenüberliegende Rückwand 5 und eine umlaufende, die Öffnung 2 begrenzende Seitenwand 6 auf. Am Gehäuse 1, und zwar im vorliegenden Ausführungsbeispiel an dessen Rückwand 5, ist eine Befestigungseinrichtung 7 ausgebildet. Diese dient dazu, einen Haltebügel 8 lösbar und klemmend zu halten, der aus einem geradlinigen Rohrstück 9 und einem Befestigungsteil 10 besteht, das von dem Rohrstück 9 rechtwinklig absteht, wobei beide Teile gegeneinander drehbar sind. Wenn das Befestigungsteil 10 an der Fahrerkabine des Lastkraftwagens befestigt ist, dann kann das Rohrstück 9 um eine in Längsrichtung des Befestigungsteils 10, also eine vertikale Achse zur Grundeinstellung des Gehäuses 1 verschwenkt werden. Außerdem kann das Gehäuse 1 auf dem Rohrstück 9 in dessen Längsrichtung verschoben werden.

Zur lösbar klemmenden Halterung des Rohrstücks 9 weist die Befestigungseinrichtung 7 eine halbzylindrische Klemmbacke 11 auf, die im Innenraum 12 des Gehäuses 1 angeordnet und gegenüber dessen Rückwand 5 mittels Stützrippen 13 abgestützt und befestigt ist. Der gehäusefesten Klemmbacke 11 ist eine ebenfalls halbzylindrische Spannbacke 14 zugeordnet, die zusammen mit der Klemmbacke 11 einen Querschnitt begrenzt, der etwa dem des Rohrstücks 9 entspricht. Zum Festziehen des zwischen Klemmbacke 11 und Spannbacke 14 eingeführten Rohrstücks dienen Spannschrauben 15, die sich an der Rückwand 5 des Gehäuses 1 abstützen und in die Spannbacke 14 eingreifen. Das Rohrstück 9 ist durch eine Ausnehmung 16 in der Seitenwand 6 des Gehäuses 1 hindurchgeführt.

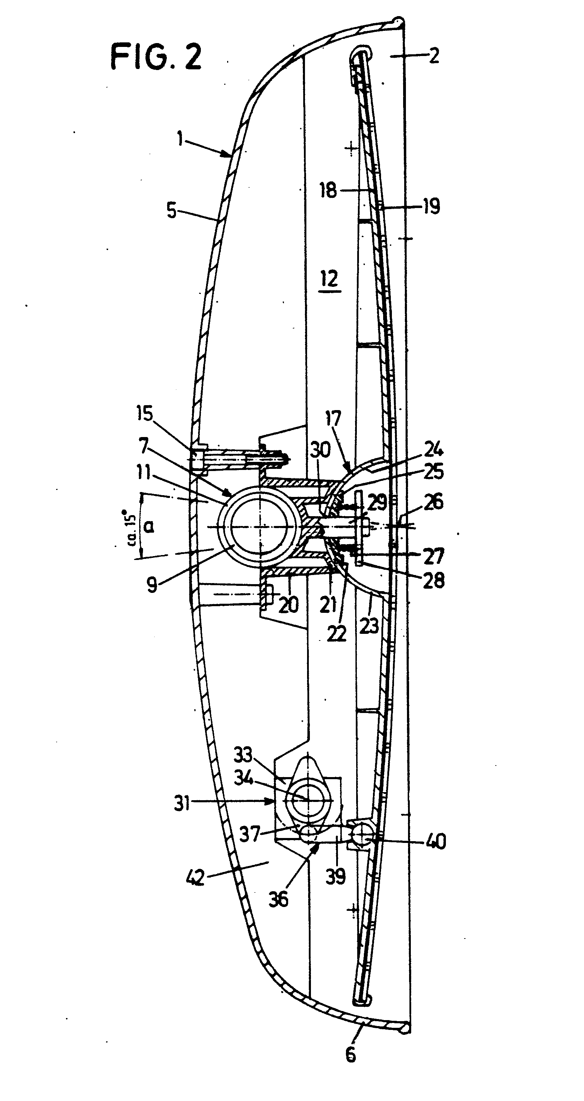

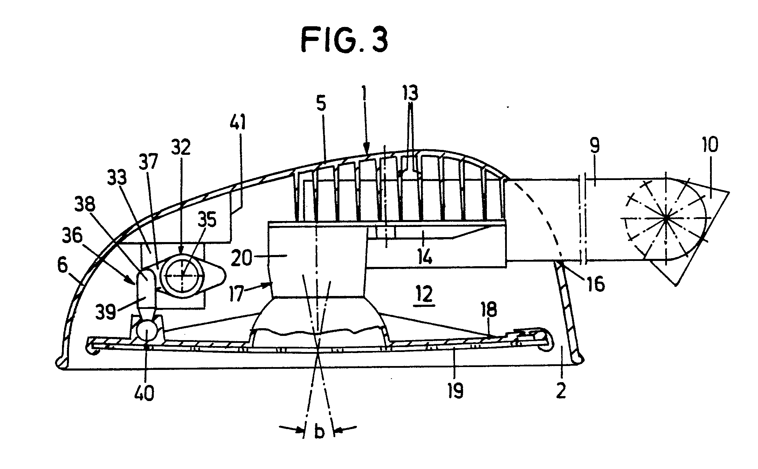

Mit der Spannbacke 14, also mit der Befestigungseinrichtung 7 und damit mit dem Gehäuse 1 ist ein Universal-Gelenk 17 verbunden, an dem wiederum eine Tragplatte 18 und eine Spiegelglasscheibe 19 angebracht ist. Das Universal-Gelenk 17 ist nach Art eines sphärischen Lagers ausgebildet. Es weist ein einstückig mit der Spannbacke 14 ausgebildeten Lagerkörpers 20 mit einer konkaven Lagerfläche 21 auf. Gegen diese Lagerfläche 21 liegt eine entsprechend ausgebildete äußere Lagerfläche 22 einer Lagerschale 23 an. Die kugelkalottenförmige verhältnismäßig dünnwandige Lagerschale 23 ist einstückig mit der Tragplatte 18 ausgebildet. Sie weist eine innere Lagerfläche 24 auf, gegen die ein ebenfalls sphärischer Lagerdeckel 25 anliegt. Die Lagerfläche 21, die Lagerflächen 22, 24 und der Lagerdeckel 25 haben einen gemeinsamen Kugelmittelpunkt 26, um den die Tragplatte 18 mit der Spiegelglasscheibe 19 relativ zum Gehäuse 1 schwenkbar ist. Dieser Kugelmittelpunkt 26 liegt - wie die Figuren 2 und 3 erkennen lassen - in der Tragplatte 18, und zwar etwa im Schnittpunkt der Symmetrieachsen 3 und 4. Gegen den Lagerdeckel 25 wirkt in Richtung auf den Lagerkörper 20 eine vorgespannte Druckfeder 27, die sich gegen ein deckelartiges Widerlager 28 abstützt, das wiederum an einem Zapfen 29 festgelegt ist, der einstückig mit dem Lagerkörper 20 ausgebildet ist und eine zentrische Öffnung 30 der Lagerschale 23 durchsetzt. Diese Öffnung 30 ist so groß, daß die Tragplatte 18 relativ zum Gehäuse 1 um einen Winkel a von etwa 15° um die kurze Symmetrieachse 4, also etwa um die horizontale Achse des Gehäuses 1 und um einen Winkel b von etwa 30° um die lange, also vertikale Symmetrieachse des Gehäuses 1 geschwenkt werden kann.

Die Reibung zwischen den Lagerflächen 21, 22 und der Lagerfläche 24 und dem Lagerdeckel 25 ist so groß, daß die Tragplatte 18 mit der Spiegelglasscheibe 19 in jeder Stellung hält, in die sie durch Verstellen relativ zum Gehäuse 1 gebracht werden.

Es kann eine motorische Einstellmöglichkeit für die Tragplatte 18 mit Spiegelglasscheibe 19 vorgesehen sein. Hierzu sind im Ausführungsbeispiel am Gehäuse 1 zwei elektromotorische Stellantriebe 31, 32 angebracht, die jeweils aus einem Elektromtor 33 mit nachgeordnetem Untersetzungsgetriebe bestehen. Die Abtriebsachsen 34, 35 dieser Stellantriebe 31, 32 verlaufen senkrecht zueinander, wobei jeweils eine Abtriebsachse 34 bzw. 35 zu einer der Symmetrieachsen 3 bzw. 4 parallel verläuft. An der jeweiligen Abtriebsachse 34, 35 jedes Stellantriebs 31, 32 ist ein Kur beltrieb 36 angebracht, das aus einer von der jeweiligen Abtriebsachse 34 bzw. 35 angetriebenen Kurbel 37 und einer an deren freien Ende mittels eines Kurbelgelenks angelenkten Kurbelstange 39 besteht. Die Kurbelstange 39 ist wiederum mit der Traplatte 18 mittels eines Gelenks 40 verbunden. Die Einzelheiten der Ausgestaltung dieser Stellantriebe 31, 32 sind aus der DE-OS 38 11 448 und aus der DE-OS 38 17 288 bekannt. Mittels des Stellantriebes 31 wird die Tragplatte 18 mit der Spiegelglasscheibe 19 um die kurze Symmetrieachse 4 um den Winkel a verschwenkt. Mittels des Stellantriebes 32 wird die Spiegelglasscheibe 19 um die lange Symmetrieachse 3 um den Winkel b verschwenkt. Die Stellantriebe 31, 32 sind unmittelbar auf Fundamenten 41, 42 befestigt, die einstückig mit dem Gehäuse 1 ausgebildet sind.

Die Spiegelglasscheibe 19 ist gegenüber der Tragplatte 18 auswechselbar, wie nachfolgend anhand von zwei Ausführungsbeispielen dargestellt wird.

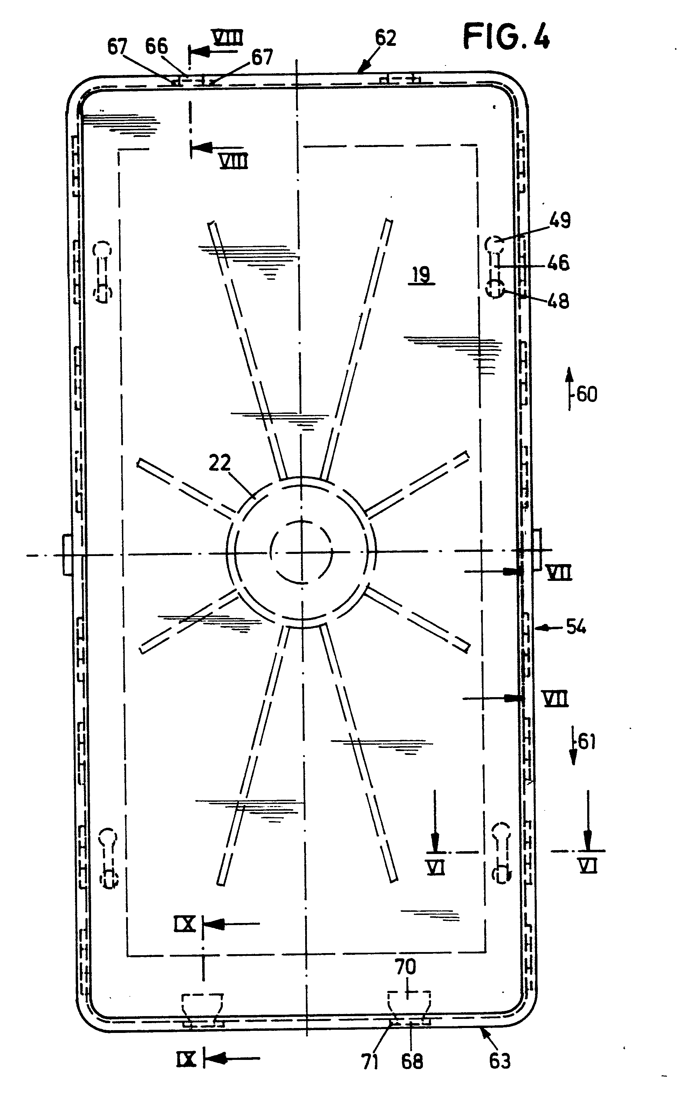

Bei dem Ausführungsbeispiel nach den Figuren 4 bis 9 ist zwischen der gewölbten Tragplatte 18, deren Wölbung der der Spiegelglasscheibe 19 entspricht, und der Spiegelglasscheibe 19 eine bekannte Heizfolie 43 angeordnet, in der Heizdrähte einer elektrischen Heizung angebracht sind. Diese Heizfolie 43 liegt also zwischen Tragplatte 18 und Spiegelglasscheibe 19 und ist üblicherweise mittels eines Haftklebers befestigt. An der dem Innenraum 12 des Gehäuses 1 zugewandten Rückseite 44 der Tragplatte 18 ist ein Verriegelungsrahmen 45 in Richtung der langen Symmetrieachse 3 verschiebbar angeordnet. Hierzu weist der Verriegelungsrahmen 45 parallel zur langen Symmetrieachse 3 verlaufende Führungsschlitze 46 auf, die von Führungszapfen 47 durchsetzt werden, die an der Rückseite 44 der Tragplatte 18 angebracht bzw. einstückig mit dieser ausgebildet sind. Die Führungszapfen 47 sind an ihren Enden mit Sicherungskappen 48 versehen, die den Verriegelungsrahmen 45 seitlich der Führungsschlitze 46 übergreifen, die also verhindern, daß der Verriegelungsrahmen 45 sich unbeabsichtigt von der Tragplatte 18 löst. Die Führungsschlitze 46 weisen an einem Ende Erweiterungen 49 auf, durch die unter leichter elastischer Verformung der Sicherungskappen 48 und/oder des Verriegelungsrahmens 45 die Sicherungskappen 48 zur Montage des Verriegelungsrahmens 45 an der Rückseite 44 der Tragplatte 18 gedrückt werden können. Bei dem Verriegelungsrahmen 45, der aus einem hartelastischen Kunststoff besteht, ist dies ohne weiteres möglich. Im übrigen befinden sich die Erweiterungen 49 an dem Ende der Führungsschlitze 46, an dem sich die Führungszapfen 47 in der entriegelten Stellung des Verriegelungsrahmens 45 befinden. Die Führungsschlitze 46 mit Erweiterungen 49 sind also schlüssellochartig ausgebildet.

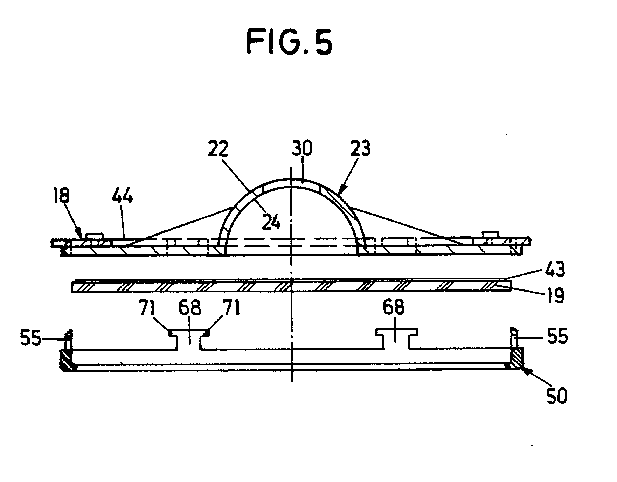

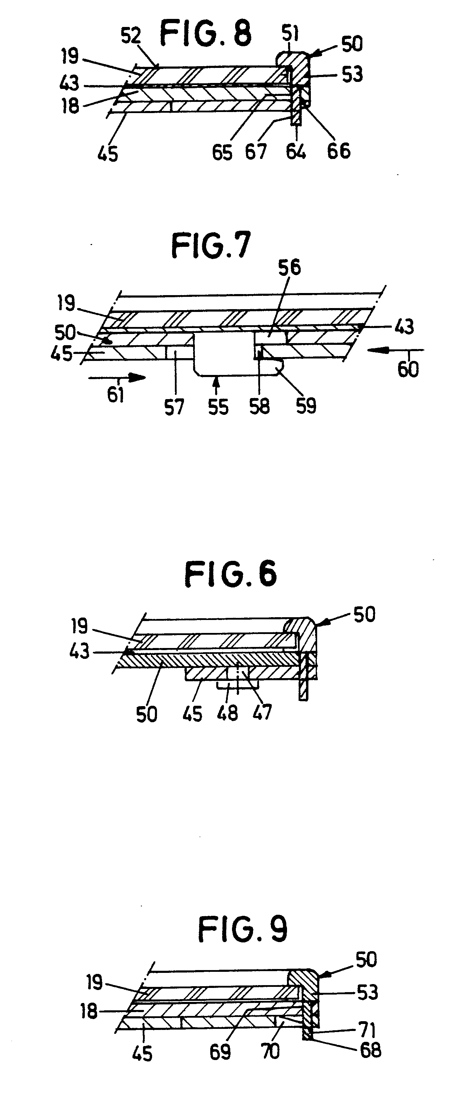

Nach dem Auflegen der Spiegelglasscheibe 19 auf die Tragplatte 18 bzw. auf die auf dieser befindliche Heizfolie 43 wird ein Halterahmen 50 aufgelegt, der im Querschnitt winkelförmig ausgebildet ist, wie den Figuren 5, 6, 8, 9 zu entnehmen ist. Dieser winkelförmige Halterahmen 50 umgreift also mit seinem nach innen ragenden Schenkel 51 die Oberseite 52 der Spiegelglasscheibe 19 in deren Randbereich. Mit seinem anderen rechtwinklig zum Schenkel 51 verlaufenden Schenkel 53 umgreift der Halterahmen 50 den Randbereich der Spiegelglasscheibe 19 und den Randbereich der Heizfolie 43 seitlich. Der Schenkel 53 liegt auf der Tragplatte 18 auf. Am Schenkel 53 sind im Bereich der langen Seitenkanten 54 der Tragplatte 18 parallel zur langen Symmetrieachse 3 verlaufende Verriegelungsstege 55 angebracht, die beim Aufsetzen des Halterahmens 50 auf die Tragplatte 18 durch in letzterer ausgebildete, den Verriegelungsstegen 55 angepaßte Schlitze 56 hindurchgesteckt werden. Im Verriegelungsrahmen 45 befinden sich gleichartig ausgebildete Verriegelungsschlitze 57, die mit den Schlitzen 56 deckungsgleich sind, wenn der Halterahmen 50 sich in der erwähnten Entriegelungsstellung befindet, in der die Sicherungskappen 48 sich etwa in Überdeckung mit den Erweiterungen 49 der Führungsschlitze 46 befinden. Die Verriegelungsstege 55 weisen eine Hinterschneidung 58 auf, die also nach außen durch einen Vorsprung 59 jedes Verriegelungsteges begrenzt wird. Zum Verriegeln des Halterahmens 50 mit der Tragplatte 18, d.h. zum Festlegen der Spiegelglasscheibe 19 relativ zur Tragplatte 18, wird der Halterahmen 50 in Verriegelungsrichtung 60 verschoben, so daß er teilweise in die jeweilige Hinterschneidung 58 unter den Vorsprung 59 des jeweiligen Verriegelungssteg 55 gelangt. Zum Lösen dieser Verriegelung wird der Halterahmen 50 in entgegengesetzter Richtung, also in Entriegelungsrichtung 61 verschoben. Damit der Halterahmen 50 nicht nur im Bereich der langen Seitenkanten mit der Tragplatte 18 verbunden ist, sind auch im Bereich der kurzen Seitenkanten 62, 63 Verriegelungseinrichtungen vorgesehen, mittels derer beim Verschieben des Verriegelungsrahmens 45 in Verriegelungsrichtung 60 eine Verbindung zwischen dem Verriegelungsrahmen 45 und dem Halterahmen 50 hergestellt wird. Hierzu sind im Bereich der in Verriegelungsrichtung 60 liegenden kurzen Seitenkante 62 am Rahmenteil 52 des Halterahmens 50 parallel zur kurzen Symmetrieachse 4 verlaufende Verriegelungsstege 64 ausgebildet, die durch entsprechende Schlitze 65 der Tragplatte 18 in Richtung auf deren Rückseite 44 hindurchgreifen. Diese Verriegelungsstege 64 selber sind mit in der Ebene des Verriegelungsrahmen 45 liegenden Hinterschneidungen versehen, in die beim Verschieben des Verriegelungsrahmens 45 in Verriegelungsrichtung 60 an letzterem ausgebildete nach außen offene Verriegelungsausnehmungen 66 eingreifen, wie Fig. 8 und 4 entnehmbar ist. Die Verriegelungsstege 64 weisen nach außen ragende, die Hinterschneidung begrenzende und sich außen unter den Verriegelungsrahmen 40 liegende Verriegelungsvorsprünge 67 auf.

An der gegenüberliegenden, also in Entriegelungsrichtung 61 angeordneten kurzen Seitenkante 63 sind dagegen Verriegelungseinrichtungen vorgesehen, wie sie Fig. 9 entnehmbar sind. Hierbei sind ebenfalls wieder am Schenkel 53 Verriegelungsstege 68 angebracht, die durch Schlitze 69 in der Tragplatte 18 hindurchgreifen und die auch Ausnehmungen 70 im Verriegelungsrahmen 45 durchsetzen. Die Verriegelungsstege 68 weisen in der Ebene des Verriegelungsrahmens 45 Hinterschneidungen auf, die also nach außen durch Verriegelungsvorsprünge 71 begrenzt werden, wie insbesondere Figur 5 entnehmbar ist. Die Ausnehmungen 70 weisen einen erweiterten Abschnitt auf, durch den die Verriegelungsstege 68 zusammen mit den Verriegelungsvorsprüngen 71 in der Entriegelungsstellung des Verriegelungsrahmens 45 hindurchgesteckt werden können. Bei einer Verschiebung in Verriegelungsrichtung 61 gelangen die Verriegelungsvorsprünge 71 dann unter den Verriegelungsrahmen. Durch die geschilderten Maßnahmen wird beim Verschieben des Verriegelungsrahmens 45 in Verriegelungsrichtung 60 der Halterahmen 50 rund um mit der Tragplatte 18 fest verspannt, wodurch die Spiegelglasscheibe 19 fest und sicher mit der Tragplatte 18 verbunden wird, wobei gleichzeitig ein Auswechseln der Spiegelglasscheibe 19 aber in sehr einfacher Weise möglich ist.

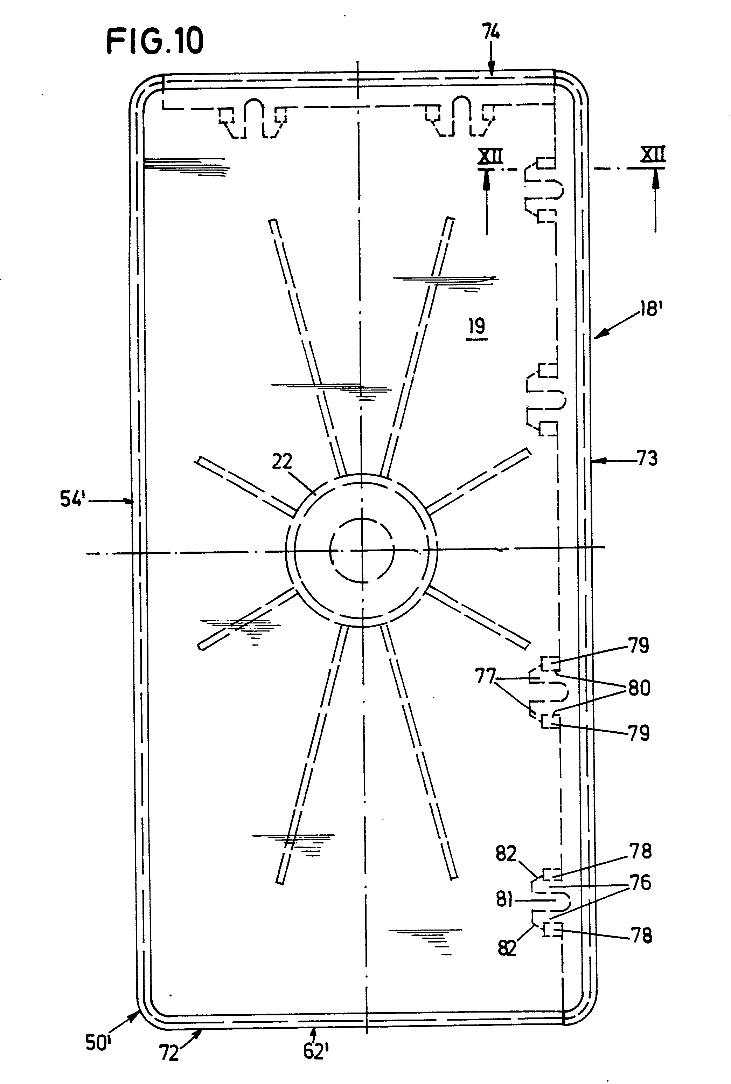

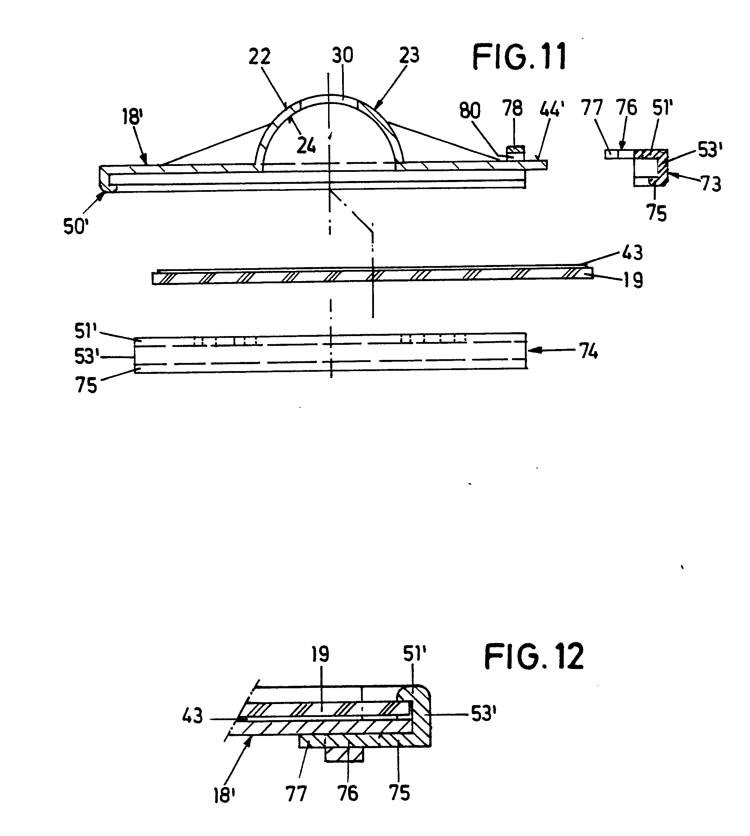

Bei dem Ausführungsbeispiel nach den Figuren 10 bis 12 ist ein Halterahmen 50' nur teilweise von einer Tragplatte 18' lösbar, während er zum Teil fest mit dieser verbunden ist. Hierzu ist ein im Bereich einer langen Seitenkante 54' und im Bereich einer kurzen Seitenkante 62' verlaufender Teil-Halterahmen 72 einstückig mit der Tragplatte 18' ausgebildet. Dagegen sind zwei weitere Teil-Halterahmen 73 und 74 gesondert zur Tragplatte 18' und mit dieser lösbar verriegelbar vorgesehen. Die Teil-Halterahmen 73 und 74 sind C-förmig ausgebildet, d.h. sie weisen außer einem die Spiegelglasscheibe übergreifenden Schenkel 51' und einem die Spiegelglasscheibe 19 seitlich einfassenden Schenkel 53' noch einer die Tragplatte 18' untergreifenden Schenkel 75 auf. An diesem Schenkel 75 sind Verriegelungshaken 76 jeweils paarweise und spiegelsymmetrisch zueinander ausgebildet, die jeweils wie eine Pfeilspitze ausgebildet sind und jeweils mit einem widerhakenartigen Vorsprung 77 an einem Widerlager 78 an der Rückseite 44' der Tragplatte 18' anliegen. Dieses Widerlager ist nach Art eines C ausgebildet und mit seinen kurzen Schenkeln 79, die als das eigentliche Widerlager für die Vorsprünge 77 dienen, an der Tragplatte 18' angebracht. Damit die Vorsprünge 77 bei Durchdringen der zwischen den kurzen Schenkeln 79 befindlichen Ausnehmung 80 nach innen, also aufeinander zu, ausweichen können, ist zwischen den beiden Verriegelungshaken 76 ein mittlerer Freiraum 81 vorgesehen, der das Einführen der Verriegelungshaken 76 in die Ausnehmung 80 durch äußere Schrägflächen 82 erleichtert.

Nach dem Einsetzen der Spiegelglasscheibe 19 auf die Tragplatte 18' und unter den fest mit der Tragplatte 18 verbundenen Teil-Halterahmen 72 werden nacheinander die Teil-Halterahmen 73 und 74 unter gleichzeitiger Herstellung der geschilderten Verriegelung über den zugeordneten Rand der Spiegelglasscheibe 19 und der Tragplatte 18' geschoben. Zum Abnehmen dieser Teil-Halterahmen 73 bzw. 74 werden die jeweils paarweise zusammengehörigen Verriegelungshaken 76 zusammengedrückt, so daß die Vorsprünge 77 von den Widerlagern 78 freikommen und durch die Ausnehmungen 80 nach außen herausgezogen werden können.

Der Winkel a bzw. der Winkel b, um den die Tragplatte 18' um das Universalgelenk 17 verschwenkbar ist, ist jeweils groß genug, um ein Lösen und Wiedereinsetzen des Teil-Halterahmens 73 bzw. 74 zu ermöglichen.

Der Halterahmen 50' bzw. 50' samt den einstückig mit ihm ausgebildeten Verriegelungsstegen bzw. Verriegelungshaken 76 besteht aus einem ausreichend elastischen Kunststoff.

## Ansprüche

1. Verstellbarer Rückspiegel für Kraftfahrzeuge, insbesondere Lastkraftwagen, mit einem Gehäuse (1) und einer auf einem schwenkverstellbaren Spiegelglashalter (Tragplatte 18, 18') lösbar angebrachten Spiegelglasscheibe (19), dadurch gekennzeichnet, daß die Spiegelglasscheibe (19) auf dem Spiegelglashalter (Tragplatte 18, 18') mittels eines zumindest teilweise lösbar mit letzteren verbundenen Halterahmen (50, 50') gehalten ist.

2. Rückspiegel nach Anspruch 1, dadurch gekennzeichnet, daß der Spiegelglashalter als Tragplatte (18) ausgebildet ist.

3. Rückspiegel nach Anspruch 1, dadurch gekennzeichnet, daß der Halterahmen (50, 50') mindestens zwei die Spiegelglasscheibe (19) seitlich umgreifende und übergreifende Rahmenteile (51, 51', 53, 53') aufweist.

4. Rückspiegel nach Anspruch 1, dadurch gekennzeichnet, daß der Halterahmen (50) Verriegelungsstege (55, 64, 68) aufweist, die mittels eines an der der Spiegelglasscheibe (19) abgewandten Seite (Rückseite 44) des Spiegelglashalters (Tragplatte 18) angeordneten Verriegelungsrahmens (45) verriegelbar sind.

5. Rückspiegel nach Anspruch 4, dadurch gekennzeichnet, daß der Verriegelungsrahmen (45) am Spiegelglashalter (Tragplatte 18) in einer Verriegelungsrichtung (60) und in einer entgegengesetzten Entriegelungsrichtung (61) verschiebbar geführt ist.

6. Rückspiegel nach Anspruch 4, dadurch gekennzeichnet, daß die Verriegelungsstege (55, 64, 68) und der Verriegelungsrahmen (45) zueinander komplementäre Vorsprünge und Ausnehmungen aufweisen, die durch Verschieben des Verriegelungsrahmens (45) relativ zu dem Spiegelglashalter (Tragplatte 18) und dem Halterahmen (50) miteinander in Eingriff bzw. außer Eingriff bringbar sind.

7. Rückspiegel nach Anspruch 6, dadurch gekennzeichnet, daß die Verriegelungsstege (55) an parallel zur Verriegelungsrichtung (60) verlaufenden Seitenkanten (54) jeweils eine Hinterschneidung (58) aufweisen, in die der Verriegelungsrahmen (45) einschiebbar ist.

8. Rückspiegel nach Anspruch 6, dadurch gekennzeichnet, daß die Verriegelungsstege (64, 68) an quer zur Verriegelungsrichtung (60) verlaufenden Seitenkanten (62, 63) Verriegelungsvorsprünge (67, 71) aufweisen, unter die der Verriegelungsrahmen (45) schiebbar ist.

9. Rückspiegel nach Anspruch 1, dadurch gekennzeichnet, daß mindestens ein Teil-Halterahmen (73, 74) C-förmig ausgebildet und seitlich auf den Spiegelglashalter (Tragplatte 18') mit Spiegelglas (19) aufschiebbar und mit diesem mittels eines Rastverschlusses verriegelbar ist.

10. Rückspiegel nach Anspruch 9, dadurch gekennzeichnet, daß der Rastverschluß durch mindestens einen elastischen Verriegelungshaken (76) und ein ortsfestes Widerlager (78) gebildet ist.

FIG.1

# FIG. 2

# FIG. 3

FIG.4

# FIG.5

## FIG. 8

## FIG. 7

## FIG. 6

## FIG. 9

FIG.10

**FIG.11**

**FIG.12**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 991 363  (W. LA·HODNY et al.) <br> * Seite 3, Zeilen 46-54; Figuren 14,15 * <br><br> --- | 1,3 | B 60 R   1/02 |
| A | EP-A-0 099 216  (BRITAX LTD.) <br> * Seite 1, Absatz 1 * <br> --- | 1 | |
| A | DE-U-7 404 579  (METALLWERK FRESE GMBH) <br> * Seite 5, Zeile 14 - Seite 6, Zeile 2 * <br><br> --- | 1 | |
| A | DE-U-8 024 513  (METALLWERK FRESE GMBH) <br> * Seite 4, Zeilen 17-31 * <br> --- | 1 | |
| A | GB-A-1 572 746  (BRITAX LTD.) <br> * Seite 1, Zeilen 69-90 * <br> ----- | 1 | |

**RECHERCHIERTE SACHGEBIETE (Int. Cl.5)**

B 60 R

Der vorliegende Recherchenbericht wurde für alle Patentansprüche erstellt

| Recherchenort | Abschlußdatum der Recherche | Prüfer |
|---|---|---|
| BERLIN | 17-10-1989 | STANDRING M A |